# EUROPEAN PATENT APPLICATION

(11) **EP 1 528 798 A1**
(43) Date of publication of application: **04.05.2005**
(21) Application number: 04022079.0
(22) Date of filing: 16.09.2004
(51) Int. Cl.: H04N 5/445, H04N 7/173

(54) **Quick EPG navigation**

(30) Priority: 31.10.2003 US 698338
(71) Applicant: MICROSOFT CORPORATION, Redmond, WA 98052 (US)
(72) Inventor: Danker, Daniel, Redmond WA 98052 (US); Sloo, David H., Redmond WA 98052 (US)
(74) Representative: Grünecker, Kinkeldey, Stockmair & Schwanhäusser Anwaltssozietät

(57) **Abstract**

An implementation, described herein, provides a highly discoverable mechanism for the user to quickly look-ahead in the EPG grid while still using the familiar and intuitive scroll-forward look-ahead user interaction. This abstract itself is not intended to limit the scope of this patent. The scope of the present invention is pointed out in the appending claims.

## Description

### TECHNICAL FIELD

This invention generally pertains to a technology related to presentation of information associated with multimedia content.

### BACKGROUND

An Electronic Program Guide (EPG) is a schedule of multimedia content ("programs") and typically it lists those that have are broadcast on a defined schedule. A typical EPG displays the name and time of scheduled programs in a grid-like menu.

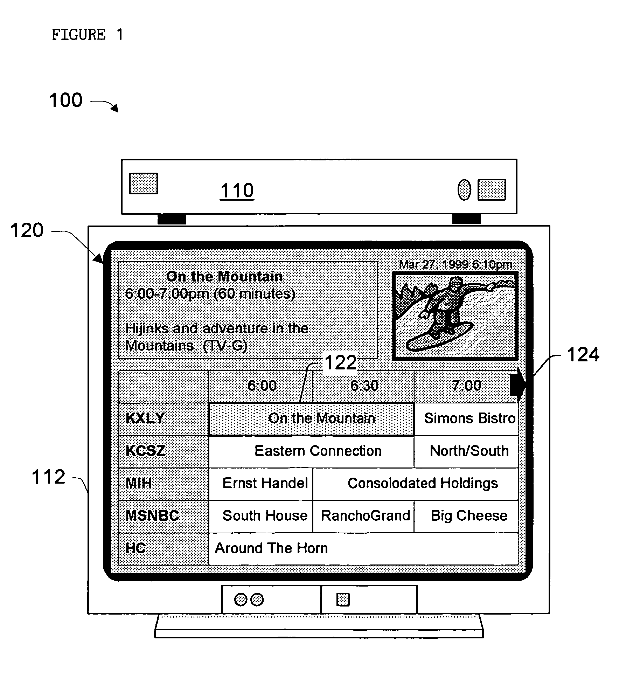

Fig. 1 shows an example of a multimedia presentation system 100 that displays a typical EPG and shows an example of a typical EPG itself. System 100 includes a digital set-top box 110, a television set 112, and a remote control device designed to allow the user to interface with the box and/or the television.

EPG 120 is an example of a typical EPG user interface (UI). It typically lists multiple programs (e.g., "Ernst Handel" and "Big Cheese") in a two-dimensional grid-like pattern. One dimension of the grid is the channel (e.g., "KABC" and "HBO") that is broadcasting the specified programming and the other dimension is its scheduled broadcast times (e.g., "6:00pm" and "7:00pm").

As shown in Fig. 1, the length of the program block (e.g., 122) is typically proportional to the length of the program. Also, the program blocks are typically aligned with uniform blocks of times. That way, the front edge of the program blocks for all programs beginning at the same time (e.g., "7:00pm") are aligned. Because of this, the user is able to quickly and easily see what programming is available and when it is scheduled to start and end.

An EPG itself is typically generated by an application. on the set-top box 110 and is typically based on information received from a source external to the multimedia presentation system 100.

A typical EPG may include other options, such as parental controls, pay-per-view program ordering, program search based on theme or category, and VCR set-up to record programs.

### Scroll-Forward Interaction

As indicated by arrow 124 in Fig. 1, the typical EPG allows a user to scroll forward in time in the grid to "look-ahead" to see the future programming schedule. Also, a user may scroll up or down to see what is scheduled on other channels.

With a conventional EPG, the programming shown in the EPG grid moves forward in uniform time increments (e.g., half-hour) when a viewer scrolls forward in a grid. It is common for the viewer to want to see what is scheduled at some point in the future. In other words, the viewer wants to "look-ahead" in the EPG

To accomplish this, most viewers press the "scroll-forward" (e.g., right arrow) key on the remote control 114, and the EPG application on the set-top box responds by displaying programming in the next future time increment. Indeed, this scroll-forward interaction is (or has become) intuitive to the user.

### Look-Ahead in the EPG Grid

However, the viewer may want to look-ahead more than just a few time increments. For example, she may want to look-ahead 12 hours away, 24 hours away, more than 2 days away, etc. A viewer, who is comfortable with the scrolling grid interface, will often just scroll forward to find the programs scheduled at some future point, such as 12 hours away, 24 hours away, more than 2 days away, etc.

This may be a very time consuming and cumbersome process. For example, consider this scenario: It is 9:00 am on a Tuesday and a viewer wants to see listings for 8:00pm on Wednesday. The user may need to press the scroll-forward key over eighty times before the grid displays the content for which she is looking.

To overcome this problem, conventional approaches have the user change context in order to look-ahead. For example, some conventional approaches allow the user to jump ahead by large time intervals (e.g., a 24-hour jump) or give the user an option to specify an exact day and time. Still other conventional approaches give the user a manual UI to search out scheduled future programming.

These search UIs allow a user to manually select a search option and go to separate page (away from the grid) to look-ahead to a specific day/time. The viewer could go to a search user interface (UI) of a conventional EPG application and select the desired day/time to view on the EPG grid.

However, all of these conventional approaches require the user to change context from the current EPG UI and their comfortable scroll-forward interaction. In other words, the user must select a new UI and/or select another button or option other than their comfortable scroll-forward interaction.

### SUMMARY

An implementation, described herein, provides a highly discoverable mechanism for the user to quickly look-ahead in the EPG grid while still using the familiar and intuitive scroll-forward look-ahead user interaction.

This summary itself is not intended to limit the scope of this patent. Moreover, the title of this patent is not intended to limit the scope of this patent. For a better understanding of the present invention, please see the following detailed description and appending claims, taken in conjunction with the accompanying drawings. The scope of the present invention is pointed out in the appending claims.

### BRIEF DESCRIPTION OF THE DRAWINGS

The same numbers are used throughout the drawings to reference like elements and features.

Fig. 1 is an illustration of a conventional EPG grid on a multimedia presentation system.

Fig. 2 is a flow diagram showing a methodological implementation described herein.

Fig. 3 is an illustration of a user interface (UI) generated by an embodiment described herein.

Fig. 4 is an illustration of another user interface (UI) generated by an embodiment described herein.

Fig. 5 is an illustration of still another user interface (UI) generated by an embodiment described herein.

Fig. 6 illustrates an exemplary environment in which an implementation described herein may be employed.

### DETAILED DESCRIPTION

In the following description, for purposes of explanation, specific numbers, materials and configurations are set forth in order to provide a thorough understanding of the present invention. However, it will be apparent to one skilled in the art that the present invention may be practiced without the specific exemplary details. In other instances, well-known features are omitted or simplified to clarify the description of the exemplary implementations of the present invention and, thereby, to better explain the present invention. Furthermore, for ease of understanding, certain method steps are delineated as separate steps; however, these separately delineated steps should not be construed as necessarily order dependent in their performance.

The following description sets forth one or more exemplary implementations of a Quick EPG Navigation that incorporate elements recited in the appended claims. These implementations are described with specificity in order to meet statutory written description, enabling, and best-mode requirements. However, the description itself is not intended to limit the scope of this patent.

These exemplary implementations, described herein, are examples. These exemplary implementations do not limit the scope of the claimed present invention; rather, the present invention might also be embodied and implemented in other ways, in conjunction with other present or future technologies.

An example of an embodiment of a Quick EPG Navigation may be referred to as an "exemplary quick EPG navigator."

### Introduction

Using the familiar user-interactive scroll-forward function to look-ahead in the electronic program guide (EPG) may be a tedious and cumbersome task for the user. This is particularly true when looking considerably ahead in the schedule (e.g., 12 hours, a day, 2 days, etc.).

Conventional solutions to this require that the user move away from their comfortable EPG grid and the scroll-forward function. They require that the user change context. Consequently, they are not very discoverable.

Some users are uncomfortable with or simply dislike the conventional look-ahead options that take them away from their familiar context. Many users are unfamiliar with them. Many are unable or unwilling to determine how to access them. Many others are simply unaware of their existence.

Consequently, many users prefer to use the interactive interface with which they are comfortable, namely the interactive scroll-forward. Instead of changing context, many users will repeatedly press the scroll-forward key on the remote control to accomplish a look-ahead in the schedule.

The exemplary quick EPG navigator provides a highly discoverable mechanism for the user to quickly look-ahead in the EPG grid while still using the familiar and intuitive scroll-forward look-ahead user interaction. It has the potential to reduce the number of scroll-forward keystrokes from a hundred or more to only a few.

### Operation of the Exemplary Quick EPG Navigation

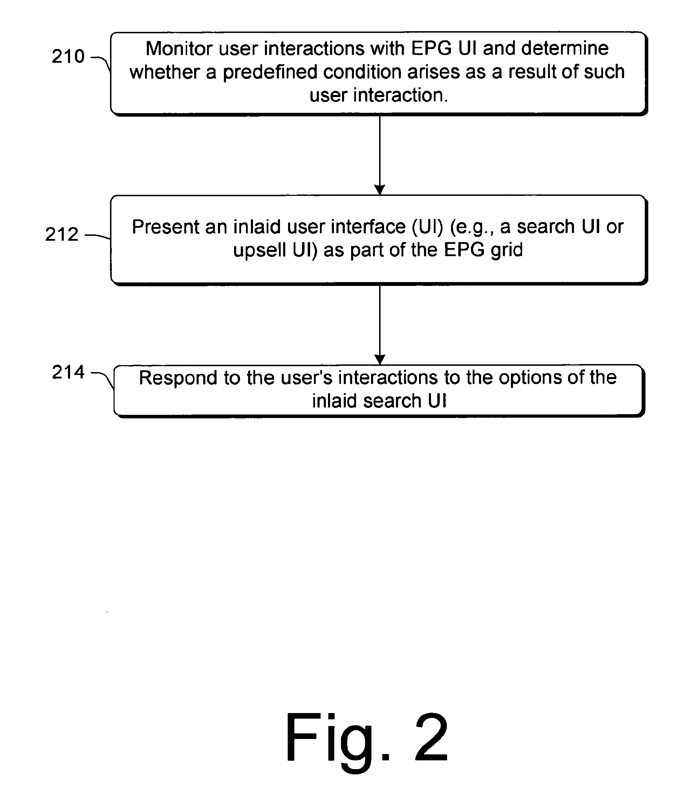

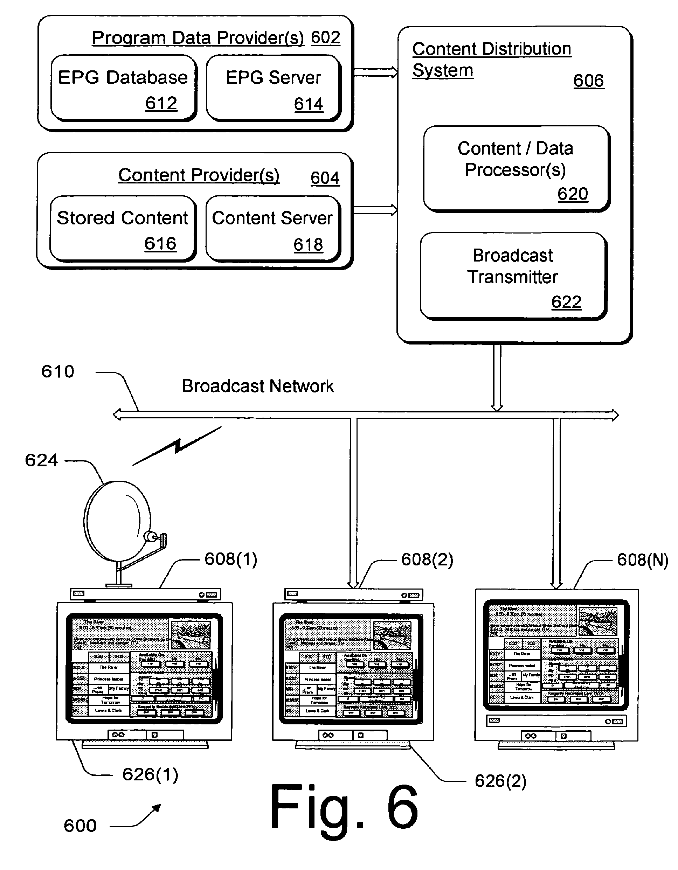

Fig. 2 shows a methodological implementation of the exemplary quick EPG navigator. This methodological implementation may be performed in software, hardware, or a combination thereof. More particularly, this methodological implementation may be performed by a presentation device such as 608(1) shown in Fig. 6.

The exemplary quick EPG navigator, as provided by the methodological implementation, improves navigation for finding content that plays in the future by intercepting scrolling behavior and displaying a panel that lets viewers jump to specific locations in the grid without having to scroll all the way to those locations in single increments.

The user views an EPG grid of scheduled programs much like that seen in Fig. 1. The user then interacts with the EPG UI. She typically uses a remote control device.

At 210 of Fig. 2, the exemplary quick EPG navigator monitors the user interactions. It determines whether a predefined condition arises as a result of such user interaction. There are many predefined conditions that may trigger this determination. Examples of such conditions include (but are not limited to):
- User repeatedly presses the scroll-forward key a sufficient number of times to advance a defined amount of time into the future (e.g., 60 minutes and 120 minutes).
- User repeatedly presses the scroll-forward key a defined number of times.
- User presses the left arrow key (in an attempt to go back in time in the EPG grid).
- User presses a designated "quick navigation" key on the remote (or some other designated key).
- User is viewing a "search results" page and attempts to scroll through it a defined number of times.

When specific conditions arise, based upon the user's actions, it replaces, at 212, at least part of the grid with a context-sensitive inlaid quick navigation UI (or "menu") that presents navigation options to the user.

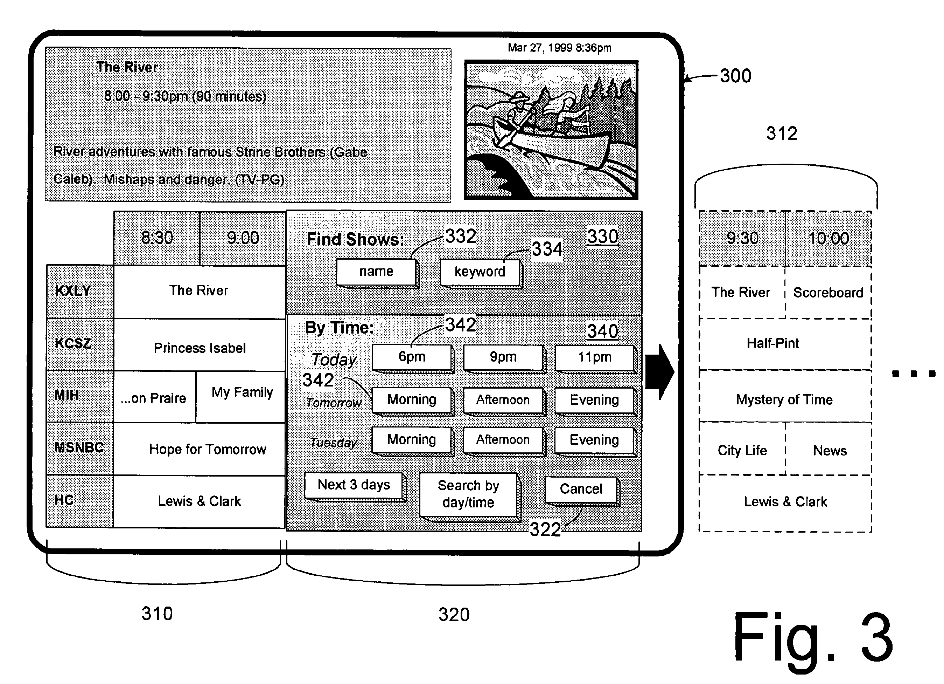

Fig. 3 illustrates an example of screen 300 displaying an EPG grid 310 and an inlaid quick navigation UI 320 of the exemplary quick EPG navigator. This example assumes that the user was viewing an EPG grid much like that seen in Fig. 1. The user then presses the scroll-forward key several times. As shown at 310, the EPG grid now shows the times of "8:30" and "9:00."

The context-sensitive inlaid quick navigation UI is called "inlaid" or "embedded" because it is logically inlaid between blocks of time intervals in the EPG grid. This concept is represented by the dashed-line EPG grid 312. As indicated by its dashed lines and its positioning outside of the screen 300, it is not actually visible to the user. However, it is illustrated here to demonstrate that the EPG grid actually continues past the inlaid UI 320.

At a predefined point (represented here around 8:30), the exemplary quick EPG navigator presents the inlaid quick navigation UI 320. As illustrated in Fig. 3 , this UI may include many options. These options are presented as a set of buttons that the viewer can press, each providing a faster way to specify and arrive at content. The predefined point is necessarily near to the present time in the grid―the inlaid quick navigation is intended to be rapidly accessible.

The following is a list of exemplary options that may be presented in the inlaid quick navigation UI 320 at, for example, 9AM on Tuesday:
- Today at 6PM
- Tomorrow at 8AM
- Tomorrow at Noon
- Tomorrow at 6PM
- Choose a Day and Time
- Search by Title

When chosen, the options that designate a specific day and time immediately navigate to a new location in the grid. The "choose a day and time" option lets the viewer specify a day and time to navigate to, which is useful if the viewer is attempting to scroll several days into the future. The "search by title" option presents still another way to find content that the viewer might not have considered, but that could make navigation easier.

Examples of user-selectable options may include the following (by way of example and not limitation):
- option to search future programming based upon one or more characteristics of that programming;
- option to look ahead into the schedule of multimedia programming of the EPG UI;
- option to view one or more live television multimedia programs;
- option to view one or more on-demand multimedia programs;
- option to view one or more pay-per-view multimedia programs;
- option to view one or more locally stored multimedia programs;
- option to view one or more pay-per-view multimedia programs;
- option to view one or more multimedia commercial messages;
- option to filter or otherwise adjust the parameters the determine which programs are listed by time within the grid. For example, an option to include only half-hour programs, only programs with the word weather.

In Fig. 3, the UI 320 is shown with two display areas. A find-shows display area 330 is for quickly finding shows and a by-time display area 340 is for finding shows by times. Each display area includes various buttons, such as 332, 334, 342, and 344, for example. It may also include "cancel" button 322 to cancel the display of the UI 320 and return to the full grid. Optionally, the user may also accomplish this by continuing to scroll-forward.

At 214 of Fig. 2, the exemplary quick EPG navigator responds to the user's interactions to the options of the inlaid search UI 320. When one of the buttons (e.g., such as button 332) is chosen, the grid automatically jumps to the corresponding location in the grid. For example, if the user chooses the option to view the grid at 6pm, then a new EPG grid is display where the grid starts at 6pm. In this instance, the full grid (without the inlaid search UI 320) is shown.

Alternatively, in response to a selected option, the exemplary quick EPG navigator may generate additional search UIs, generate search results screens, or immediately join the presentation of multimedia content.

The quick navigation UI includes one or more display areas, wherein contents of such display areas may include the following (by way of example and not limitation):
- one or more options to search future programming based upon one or more characteristics of that programming;
- one or more options to look ahead into the schedule of multimedia programming of the EPG UI;
- one or more options to view one or more live television multimedia programs;
- one or more options to view one or more on-demand multimedia programs;
- one or more options to view one or more pay-per-view multimedia programs;
- one or more options to view one or more locally stored multimedia programs;
- one or more options to view one or more multimedia commercial messages;
- option to filter or otherwise adjust the parameters the determine which programs are listed by time within the grid.

### Examples of other Uls

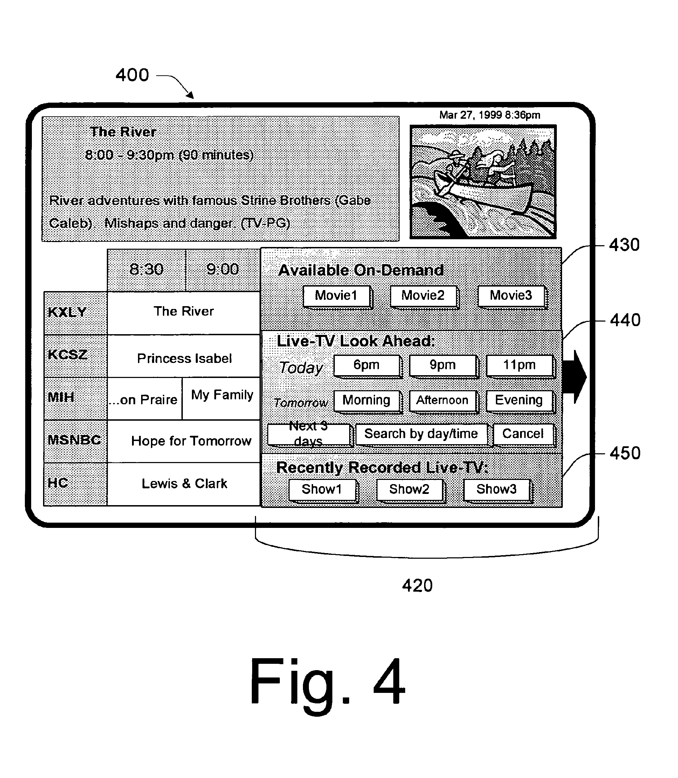

Fig. 4 illustrates screen 400 and another example of an inlaid quick navigation UI 420 of the exemplary quick EPG navigator. The UI 420 includes an "up-sell" field 430, which displays a list of on-demand programming available. Since the user may be simply searching for something to watch, she may be very open to viewing a suggested program from amongst those available on-demand.

Which options to provide to the user in the "up-sell" display area 430 may be determined by a content provider and/or a content distribution system. For example, a cable network may want to intentionally market three popular entertainment titles (e.g., "moviel," "movie2,"and "movie3"). Therefore, it lists those three titles as options in the "up-sell" display area 430. This on-demand content may be provided via a video-on-demand (VoD) provider or a subscription VoD provider.

The UI 420 shown in Fig. 4 also includes a "live-tv, look-ahead" field 440 for jumping ahead in the EPG grid. It also includes a "recently recorded" field 450 which lists the programming that was most recently stored on the presentation system (e.g., a digital video recorder (DVR) set-top box).

The UI 420 may show other fields and options for broadcast television, cable television, pay-per-view (PPV), or other available content. Indeed, the UI 420 may be customized to match the personality and preferences of the user.

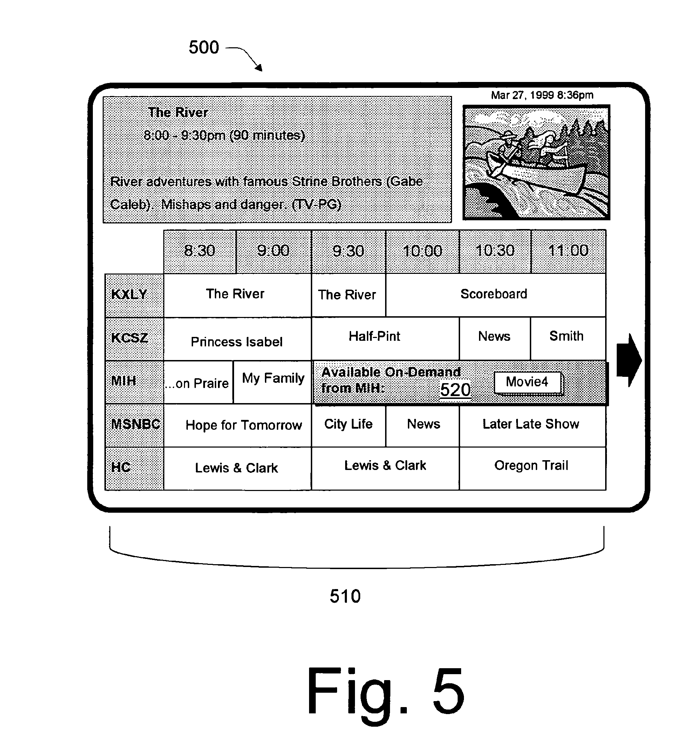

Fig. 5 illustrates screen 500 and another example of an inlaid quick navigation UI 520 of the exemplary quick EPG navigator. In this example, the UI 520 only replaces a smaller portion of the grid. Indeed, it may only replace a portion that corresponds to a particular channel (such as the one that the user has highlighted as she scrolls).

In this scenario, the UI 520 may be a specialized up-sell display area that offers a premium feature (such as subscription VoD) related to the highlighted channel.

Furthermore, the user may perform a search through a conventional search UI and receive a scrollable list of results. This list of results is not provided in a grid pattern. While scrolling through this list, the exemplary quick EPG navigator may present the user with an inlaid quick navigation UI much like those shown in Figs. 3-5, but such UI is not necessarily presented within a grid (since the search results might not be presented in a grid).

### Exemplary Environment

**Fig. 6** illustrates an exemplary environment 600 in which the techniques, systems, and other aspects described herein may be implemented (partially or wholly). Exemplary environment 600 is a television entertainment system that facilitates distribution of multi-media. A typical digital video broadcast (DVB) network is an example of such an environment.

The environment 600 includes one or more program data providers 602, multimedia content providers 604, a content distribution system 606, and one or more presentation devices 608(1), 608(2), ... , 608(N), which are coupled to the content distribution system 606 via a broadcast network 610.

Program content provider 602 includes an EPG database 612 and an EPG server 614. The EPG database 116 stores electronic files of program data which are used by a presentation device to generate an electronic program guide (EPG). Program data includes, for example, program titles, ratings, characters, descriptions, actor names, station identifiers, channel identifiers, schedule information, and so on.

Multimedia content provider 604 includes a content server 618 and stored content 616, such as movies, television programs, commercials, music, and similar audio and/or video content. One or more of the multimedia content providers may be a premium service provider (PS provider).

Content server 618 controls distribution of the stored content 616 from content provider 604 to the content distribution system 606. Additionally, content server 618 controls distribution, to the content distribution system 606, of live content (e.g., content that was not previously stored, such as live feeds) and/or content stored at other locations.

Content distribution system 606 may be coupled to a network, such as an intranet or the Internet. The content distribution system 606 includes a broadcast transmitter 622 and one or more content/data processors 620. Broadcast transmitter 622 broadcasts signals, such as cable television signals, across broadcast network 610.

Broadcast network 610 can include a cable television network, RF, microwave, satellite, and/or data network, such as the Internet, and may also include wired or wireless media using any broadcast format or broadcast protocol. Additionally, broadcast network 610 can be any type of network, using any type of network topology and any network communication protocol, and can be represented or otherwise implemented as a combination of two or more networks.

A particular content processor 630 may encode, or otherwise process, the received content into a format that is understood by the multiple presentation devices 608(1), 608(2), ..., 608(N) coupled to broadcast network 610. Although Fig. 6 shows a single content provider 604, a single program data provider 602, and a single content distribution system 606, exemplary environment 600 can include any number of content providers and/or program data providers coupled to any number of content distribution systems.

Content distribution system 606 is representative of a headend service that provides EPG data, as well as content, to multiple subscribers. Each content distribution system 604 may receive a slightly different version of the program data that takes into account different programming preferences and lineups. The configuration (e.g., trigger for UI display, content of UI, layout of UI) of the exemplary quick EPG navigator on a presentation device may be set from the content distribution system 606.

Presentation devices 608 can be implemented in a number of ways. For example, a presentation device 608(1) receives broadcast content from a satellite-based transmitter via a satellite dish 624. Presentation device 608(1) is also referred to as a set-top box or a satellite receiving device. Presentation device 608(1) is coupled to a television 626(1) for presenting the content received by the presentation device (e.g., audio data and video data), as well as to a graphical viewer interface. A particular presentation device may be coupled to any number of televisions and/or similar devices that can be implemented to display or otherwise render content. Similarly, any number of presentation devices can be coupled to a single television.

Presentation device 608(2) is also coupled to receive broadcast content from broadcast network 610 and provide the received content to associated television 626(2). Presentation device 608(N) is an example of a combination television and integrated set-top box. In this example, the various components and functionality of the set-top box are incorporated into the television, rather than using two separate devices. The set-top box incorporated into the television may receive broadcast signals via a satellite dish (similar to satellite dish 624) and/or via broadcast network 610. In alternate implementations, presentation devices may receive broadcast signals via the Intemet or any other broadcast medium.

Each presentation device (such as device 608(1)) runs an electronic program guide (EPG) application that utilizes the program data. This application may be an implementation of the exemplary quick EPG navigator.

A presentation device (such as device 608(1)) may access video from a removable storage medium, such as a DVD disk. Also, it may access video from a non-removable storage medium, such as an internal hard drive.

A presentation device may receive multimedia content via analog or digital broadcast, multicast, or unicast. It may receive it via a via terrestrial or satellite communications link. It may receive it via a communications networks, such as the Internet.

### Processor-Executable Instructions

An implementation of an exemplary quick EPG navigator may be described in the general context of processor-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired, in various embodiments.

### Processor-Readable Media

An implementation of an exemplary quick EPG navigator may be stored on or transmitted across some form of processor-readable media. Processor-readable media may be any available media that may be accessed by a computer. By way of example, and not limitation, processor-readable media may comprise "computer storage media" and "communications media."

"Computer storage media" include volatile and non-volatile, removable and non-removable media implemented in any method or technology for storage of information such as processor-readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

"Communication media" typically embodies processor-readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example and not limitation, communication media includes wired media such as a wired network or direct-wired connection, and wireless media such as acoustic, RF, infrared, and other wireless media. Combinations of any of the above are also included within the scope of processor-readable media.

### Conclusion

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A processor-readable medium having processor-executable instructions that, when executed by a processor, performs a method comprising:
presenting an electronic program guide user interface illustrating a schedule of multimedia programming in a grid pattern;
monitoring user interactions with the electronic program guide user interface;
in response to one or more triggering user interactions, presenting a quick navigation user interface having one or more user-selectable options therein;
responding to a user's selection of one or more of the options of the quick navigation user interface.

2. A medium as recited in claim 1, wherein the method further comprises generating the quick navigation user interface and determining which user-selectable options to include based upon context of user interactions with the electronic program guide user interface before a triggering user interaction.

3. A medium as recited in claim 1, wherein the method further comprises generating the quick navigation user interface and determining positioning of the quick navigation user interface within the electronic program guide user interface based upon context of user interactions with the electronic program guide user interface before a triggering user interaction.

4. A medium as recited in claim 1, wherein the method further comprises generating the quick navigation user interface and determining positioning of the quick navigation user interface within the grid pattern of the schedule of multimedia programming based upon context of user interactions with the electronic program guide user interface before a triggering user interaction.

5. A medium as recited in claim 1, wherein a triggering user interaction comprises one or more "scroll-forward" selections, such selection are indicative of a user's desire to see future scheduled programming in the electronic program guide user interface.

6. A medium as recited in claim 1, wherein the triggering user interactions are selected from a group consisting of:
• multiple repeated performance of a "scroll-forward" selection action which advances a presentation of a schedule of programming in the grid of the electronic program guide user interface a predefined amount of time into the future;
• a predefined number of multiple repeated performance of a "scroll-forward" selection action;
• a performance of a designated selection action.

7. A medium as recited in claim 1, wherein the user-selectable options are selected from a group consisting of:
• option to search future programming based upon one or more characteristics of that programming;
• option to look ahead into the schedule of multimedia programming of the electronic program guide user interface;
• option to view one or more live television multimedia programs;
• option to view one or more on-demand multimedia programs;
• option to view one or more pay-per-view multimedia programs;
• option to view one or more locally stored multimedia programs;
• option to view one or more pay-per-view multimedia programs;
• option to view one or more multimedia commercial messages;
• option to filter or otherwise adjust the parameters the determine which programs are listed by time within the grid.

8. A medium as recited in claim 1, after the presenting of the quick navigation user interface, the quick navigation user interface comprises one or more display areas, wherein contents of such display areas are selected from a group consisting of:
• one or more options to search future programming based upon one or more characteristics of that programming;
• one or more options to look ahead into the schedule of multimedia programming of the electronic program guide user interface;
• one or more options to view one or more live television multimedia programs;
• one or more options to view one or more on-demand multimedia programs;
• one or more options to view one or more pay-per-view multimedia programs;
• one or more options to view one or more locally stored multimedia programs;
• one or more options to view one or more multimedia commercial messages;
• one or more options to filter or otherwise adjust the parameters the determine which programs are listed by time within the grid.

9. A medium as recited in claim 1, wherein the responding to the user's selection comprises presenting new content of which is selected from a group consisting of:
• a new electronic program guide user interface listing future programming based upon one or more characteristics of that programming;
• a new grid showing a schedule of upcoming multimedia programming of the electronic program guide user interface starting at a time in the future;
• a live television multimedia program;
• a on-demand multimedia program;
• a pay-per-view multimedia program;
• a locally stored multimedia program;
• a multimedia commercial message.

10. A medium as recited in claim 1, wherein after the presenting of the quick navigation user interface, the electronic program guide user interface comprises:
a first display area comprises at least a portion of the schedule of multimedia programming in a grid pattern;
a second display area comprises the quick navigation user interface.

11. A medium as recited in claim 1, wherein the quick navigation user interface is presented so that it is inlaid between time blocks of the schedule of multimedia programming in the grid pattern.

12. A multimedia presentation system comprising:
a multimedia presentation device;
a medium as recited in claim 1.

13. A processor-readable medium having processor-executable instructions that, when executed by a processor, performs a method comprising:
a means for monitoring user interactions with an electronic program guide user interface illustrating a schedule of multimedia programming in a grid pattern;
a means for receiving a user interaction with the electronic program guide user interface;
a means for presenting a quick navigation user interface in response to one or more triggering user interactions, the quick navigation user interface having user-selectable options;
a means for responding to a user's selection of one or more of the options of the quick navigation user interface.

14. A medium as recited in claim 13 further comprising a means for presenting the electronic program guide user interface.

15. A medium as recited in claim 13, wherein the triggering user interactions are selected from a group consisting of:
• multiple repeated performance of a "scroll-forward" selection action which advances a presentation of a schedule of programming in the grid of the electronic program guide user interface a predefined amount of time into the future;
• a predefined number of multiple repeated performance of a "scroll-forward" selection action;
• a performance of a designated selection action.

16. A medium as recited in claim 13, wherein the user-selectable options are selected from a group consisting of:
• option to search future programming based upon one or more characteristics of that programming;
• option to look ahead into the schedule of multimedia programming of the electronic program guide user interface;
• option to view one or more live television multimedia programs;
• option to view one or more on-demand multimedia programs;
• option to view one or more pay-per-view multimedia programs;
• option to view one or more locally stored multimedia programs;
• option to view one or more multimedia commercial messages;
• option to filter or otherwise adjust the parameters the determine which programs are listed by time within the grid.

17. A method comprising:
receiving one or more user interactions with an electronic program guide user interface illustrating a schedule of multimedia programming in a grid pattern;
in response to one or more triggering user interactions, presenting a quick navigation user interface having one or more user-selectable options therein;
receiving one or more user selections of one or more of the options of the quick navigation user interface;
responding to such user selections.

18. A method as recited in claim 17, wherein the triggering user interactions are selected from a group consisting of:
• multiple repeated performance of a "scroll-forward" selection action which advances a presentation of a schedule of programming in the grid of the electronic program guide user interface a predefined amount of time into the future;
• a predefined number of multiple repeated performance of a "scroll-forward" selection action;
• a performance of a designated selection action.

19. A method as recited in claim 17, wherein the user-selectable options are selected from a group consisting of:
• option to search future programming based upon one or more characteristics of that programming;
• option to look ahead into the schedule of multimedia programming of the electronic program guide user interface;
• option to view one or more live television multimedia programs;
• option to view one or more on-demand multimedia programs;
• option to view one or more pay-per-view multimedia programs;
• option to view one or more locally stored multimedia programs;
• option to view one or more multimedia commercial messages;
• option to filter or otherwise adjust the parameters the determine which programs are listed by time within the grid.

20. A method as recited in claim 17, wherein after presenting a quick navigation user interface, the electronic program guide user interface comprises:
a first display area comprises at least a portion of the schedule of multimedia programming in a grid pattern;
a second display area comprises the quick navigation user interface.

21. A multimedia presentation system comprising:
a presentation unit configured to present an electronic program guide user interface illustrating a schedule of multimedia programming in a grid pattern
an input unit configured to monitor and receive user interactions with the electronic program guide user interface;
wherein the presentation unit is further configured to:
• present a quick navigation user interface in response to one or more triggering user interactions received by the input unit, the quick navigation user interface having one or more user-selectable options;
• present new content in response to one or more a user interactions received by the input unit, wherein such interactions are indicative of a user selection of one or more of the options of the quick navigation user interface.

22. A system as recited in claim 21, wherein the new content is selected from a group consisting of:
• a new electronic program guide user interface listing future programming based upon one or more characteristics of that programming;
• a new grid showing a schedule of upcoming multimedia programming of the electronic program guide user interface starting at a time in the future;
• a live television multimedia program;
• a on-demand multimedia program;
• a pay-per-view multimedia program;
• a locally stored multimedia program;
• a multimedia commercial message.

23. A system as recited in claim 21, wherein the triggering user interactions are selected from a group consisting of:
• multiple repeated performance of a "scroll-forward" selection action which advances a presentation of a schedule of programming in the grid of the electronic program guide user interface a predefined amount of time into the future;
• a predefined number of multiple repeated performance of a "scroll-forward" selection action;
• a performance of a designated selection action.

24. A system as recited in claim 21, wherein the user-selectable options are selected from a group consisting of:
• option to search future programming based upon one or more characteristics of that programming;
• option to look ahead into the schedule of multimedia programming of the electronic program guide user interface;
• option to view one or more live television multimedia programs;
• option to view one or more on-demand multimedia programs;
• option to view one or more pay-per-view multimedia programs;
• option to view one or more locally stored multimedia programs;
• option to view one or more multimedia commercial messages;
• option to filter or otherwise adjust the parameters the determine which programs are listed by time within the grid.

25. A processor-readable medium having processor-executable instructions that, when executed by a processor, produces an electronic program guide user interface, the user interface comprising:
a first display area illustrating a schedule of multimedia programming in a grid pattern;
a second display area illustrating a quick navigation user interface, the quick navigation user interface having one or more user-selectable options;
an executable process associated with one or more of the user-selectable options that is configured to present new content in response to one or more a user interactions received by the input unit that is indicative of a user selection of one or more of the options of the quick navigation user interface.

26. A medium as recited in claim 25, wherein the new content is selected from a group consisting of:
• a new electronic program guide user interface listing future programming based upon one or more characteristics of that programming;
• a new grid showing a schedule of upcoming multimedia programming of the electronic program guide user interface starting at a time in the future;
• a live television multimedia program;
• a on-demand multimedia program;
• a pay-per-view multimedia program;
• a locally stored multimedia program;
• a multimedia commercial message.

27. A medium as recited in claim 25, wherein the triggering user interactions are selected from a group consisting of:
• multiple repeated performance of a "scroll-forward" selection action which advances a presentation of a schedule of programming in the grid of the electronic program guide user interface a predefined amount of time into the future;
• a predefined number of multiple repeated performance of a "scroll-forward" selection action;
• a performance of a designated selection action.

28. A medium as recited in claim 25, wherein the user-selectable options are selected from a group consisting of
• option to search future programming based upon one or more characteristics of that programming;
• option to look ahead into the schedule of multimedia programming of the electronic program guide user interface;
• option to view one or more live television multimedia programs;
• option to view one or more on-demand multimedia programs;
• option to view one or more pay-per-view multimedia programs;
• option to view one or more locally stored multimedia programs;
• option to view one or more pay-per-view multimedia programs;
• option to view one or more multimedia commercial messages;
• option to filter or otherwise adjust the parameters the determine which programs are listed by time within the grid.
